# EUROPEAN PATENT APPLICATION

(11) **EP 4 343 338 A1**
(43) Date of publication of application: **27.03.2024**
(21) Application number: 23197067.4
(22) Date of filing: 13.09.2023
(51) Int. Cl.: G01N 35/10

(54) **METHOD AND DEVICE FOR THE CLEANING OF PIPETTING TIPS**

(30) Priority: 22.09.2022 LU 103019
(71) Applicant: Stratec SE, 75217 Birkenfeld (DE)
(72) Inventor: Barenthin, Volker, 75217 Birkenfeld (DE); Trump, Martin, 75217 Birkenfeld (DE); Hinderer, Fabian, 75217 Birkenfeld (DE); Nandana, Varchasvi, 75217 Birkenfeld (DE)
(74) Representative: Tegethoff, Sebastian

(57) **Abstract**

The present invention provides a cleaning device for the cleaning of a pipetting tip and a method of using the same. The device comprises a horizontally extending upper part and a vertically from the lower end of the upper part extending shaft, wherein both parts comprise a vertically extending central receiving hole for receiving the pipetting tip, and wherein the upper part comprises at least one oscillating nozzle which is arranged perpendicular to the central receiving hole, and which is connected by a channel to a first connector to a cleaning fluid supply.

## Description

### Field of the Invention

The invention relates to a method and device for the cleaning of pipetting needles.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

Two different types of pipetting tips or needles are basically used in pipetting modules of human diagnostics analysis systems for handling liquids, disposable tips and reusable tips that may be fixed to a device. The disposable tips are mainly used for pipetting patient samples and reagents with may be hazardous or are related to an increased risk of causing contaminations. The great advantage of using disposable tips is the related reduction of the risk of a carry-over because the tip is replaced after each pipetting step.

Reusable tips are mainly used for pipetting reagents and patient samples for which a low risk of cross-contamination exists, e.g., for blood grouping. Nevertheless, reusable tips must be cleaned to prevent contamination and dilution or the mixing of reagents.

Cleaning or washing stations are used for cleaning reusable tips. In the simplest case, such a cleaning or washing station relates to a device that only has a vertical hole for holding the tip or needle and a suction unit which is immersed for cleaning the tip in the bore and rinsed from the inside with a cleaning fluid. The cleaning fluid that is used is either sucked out directly or rises in the bore and flows over the outer surface of the tip. This can be used, for example, to remove residues that remain on the outer surface of the needle when it is immersed in reagent or sample. The depth of the bore of the washing station must be adapted to the depth of immersion.

During a so-called passive cleaning of the tip surface, the inner geometry of the tip and parts of the outer surface are cleaned. As already described above, the needle is immersed in a blind hole. In this process, the spent fluid is usually extracted outside the bore. Rinsing from the inside of the needle can be done either by a precision pump, which is necessary anyway, or by an additional rinsing pump. With this additional pump, it is possible to use a system that achieves particularly high rinsing pressures and volume flows for cleaning when the precise pipetting pump usually does not reach the value. With this type of cleaning, no sample or reagent may remain in the needle. However, this also makes it possible to clean the entire geometry. The inner geometry is actively reached by the cleaning fluid, the outer surface can be passively covered with the fluid and cleaned depending on the geometry of the blind hole.

Alternatively, or in addition, the tip can also be actively exposed to a flow through a nozzle in the washing station. In contrast to the passive washing method described above, a disproportionately higher flow can be generated regarding the surface of the tip via the nozzle. This results in a more effective cleaning. The cleaning performance is determined, among other things, by the fluid used, the duration of the flow, the amount of fluid used and the rinsing pressure. However, the factors liquid, fluid quantity and time have significant effects on the analysis system and its process.

Active cleaning of the outer surface is used to clean only the outer surface. The inner geometry of the needle is not reached by the cleaning fluid. To start the process, the pipetting tip also enters a bore. Perpendicular to the axis of this bore or tangential to its wall is another bore arranged. This hole can be filled by a rinsing pump. If the outer surface of the needle is to be cleaned over a certain length, the rinsing pump is activated depending on the Z-position of the pipettor during retraction or extension. With this procedure, the cleaning performance can be adjusted on the one hand via the speed of the pipettor. The slower the needle is moved past the rinsing nozzle, the longer the reaction or cleaning time. In addition, the volume flow and thus the rinsing pressure can be adjusted via the performance of the pump. This form of cleaning makes it possible to rinse the needle on the surface even if it has previously taken up reagents or samples.

Combinations of the above-mentioned cleaning methods are often used in the rinsing and washing stations of known analyser systems. Several holes are arranged in the device that carries out the active and passive cleaning in a targeted manner. Often, there is a third opening which is used exclusively to collect liquid waste which the pipettor discharges before cleaning.

In high-throughput systems are often multi-tip pipettors used. They are usually located on a shared axis but can move along this axis within an individual range of motion. In this case, rinsing and washing stations are used which can clean all the needles on one axis at the same time.

It is possible that small amounts of liquid remain on the tip when it leaves the washing station due to the flow of the cleaning fluid. This may result in an undesired dilution of a respective reagent with increasing cleaning cycles during the pipetting of reagents, because more and more residual cleaning fluid is introduced into the reagent supply container. It must be ensured that no cleaning fluid remains on the needle after rinsing of the tip when the cleaning process has been completed to prevent this effect. This can be facilitated on the one hand by making the contact angle between the needle surface and the fluid as large as possible The associated hydrophobicity allows liquid droplets to roll off more easily. If the functionalisation of surfaces is no longer sufficient, possible fluid residues can also be wiped off by a forced flow. This can be generated, for example, by air nozzles.

Published European patent application EP 3 438 674 A1 describes a cleaning device in which the pipetting tip is actively rinsed from the outside. However, not through a bore as described above, but through an annular gap. This creates an umbrella-like liquid film around the full circumference of the tip. This procedure is mainly used to remove dyes such as haematoxylin or eosin. After rinsing, an annular gap is also used to form a so-called 'air sword'.

Published German patent application DE 196 10 607 A1 discloses a cleaning device in which the pipetting tip can be actively cleaned on the surface by two opposite rinsing nozzles. Two opposite holes are arranged underneath the rinsing nozzles. Via said holes, incoming fluid can be kept at a constant level. In addition, residual fluid remaining on the needle can be extracted or removed after external rinsing has been completed. A further suction hole is located at the bottom of the central receiving hole so that the cleaning device can also be completely emptied.

Published U.S. patent application US 2002/185161 A1 discloses a device for cleaning pipette needles or stirrers, the device comprising a trough which holds cleaning fluid and whose lower region has a fluid duct for filling and/or emptying purposes and whose upper region has at least one feed pipe which leads into at least one nozzle directed into the trough interior. Advantageously, the device has a cylindrical trough and in insert with nozzles which is screwed into the trough. The invention further concerns a method of cleaning pipette needles or stirrers, the material to be washed being introduced into the trough interior and sprayed with a washing fluid. The device can also be sued to flush the interior of a pipette needle.

Published U.S. patent application US 2020/139360 A1 relates to methods and devices for automatically transferring samples and/or reagents from sample vessels and/or reagent vessels into at least one receiving vessel In one example embodiment, a pipetting device is disclosed including a pipettor that is movable along a first direction and has at least one first pipetting needle that is movable along an arm of the pipettor along a second direction, substantially normal to the first direction. The pipetting needle is lowerable along a third direction into the individual vessels. In some specific embodiments, the arm of the movable pipettor has at least one second pipetting needle which, regardless of the current position of the first pipetting needle, is movable past the first pipetting needle and is lowerable into the individual vessels.

Published U.S. patent application US 2012/017945 A1 discloses a wash element for washing one or more reusable fluid manipulators is provided comprising at least one nozzle for connection to a fluid pump to generate a fluid jet and at least one deflector surface positioned to deflect the fluid jet towards a washing zone for receiving at least a portion of the fluid manipulator. The deflector surface is being shaped to broaden the fluid jet. The invention further relates to a wash station having a cavity provided with one or more wash elements. The invention yet further relates to an automated system for manipulating fluids comprising at least one wash station and a controller set up to control washing the fluid manipulator. In a process for washing the reusable fluid manipulator at least a portion of the fluid manipulator is moved in a washing zone, a fluid jet of washing fluid is generated and directed onto a deflector surface shaped to broaden and deflect the fluid jet towards the washing zone.

Satisfactory cleaning results can be achieved with the above-described existing systems. However, the result always depends on the following factors:
- Flushing time: How long can the cleaning liquid interact with the contaminated surfaces.
- Required material: How much cleaning liquid can flow over the contaminated surface in a set time.
- Flow rate and flushing pressure: Depending on the flushing pump and the cross-section of the cleaning nozzle, these two factors depend on each other. If the cross-section of the nozzle is reduced at the same flow rate, the flow velocity increases and the impact force on the soiled surface increases accordingly. However, the flow rate of the pump depends on the back pressure. With a reduced nozzle cross-section, there is also a risk that the flow rate will be reduced. If the cross-section is increased, the flow rate increases, but the flow velocity is reduced.
- Type of surface contamination: If the components are highly soluble in the flushing medium (e.g. water-soluble contamination, flushing liquid water), the cleaning time can be very short. If the soiling is less soluble, more viscous, dried up, etc., the process is delayed.

Due to the interaction of these individual factors, no ideal rinsing procedure can be defined. In principle, the longer the rinsing time and the higher the material input, the better the cleaning result. However, precisely these factors are severely limited in analytical systems. The rinsing time has a considerable influence on the availability of the pipettor. If it is cleaned, it cannot pipette any reagents/samples. If the rinsing time is too high, the system cycle is delayed. This is fixed due to the reactions running in the background and cannot be changed at will.

The material input determines the total volume of flushing fluid consumed in the system. In fact, the so-called system fluids are mostly used for cleaning. Usually, deionised water or buffered saline solutions are used. If too much fluid is used for cleaning, it may be missing for other applications. This means that the supply containers have to be replaced or refilled at shorter intervals. The total turnover of system fluid increases. Apart from the purely ergonomic inconveniences for the laboratory staff caused by carrying the containers, this also increases the ancillary costs for the system.

With the existing solutions, satisfactory results can be achieved, but they are related to a long dwell time of the pipettor in the cleaning module, or a high consumption of cleaning liquid due to correspondingly high rinsing pressures.

If a lot of cleaning fluid must be used, it has to be kept available in corresponding quantities and with corresponding installation space. If flushing of reusable tips must be carried out often, the pipettor is tied up and cannot perform any other tasks during this time.

The present invention is intended to counteract these effects by improving the cleaning performance and making the process more efficient overall by reducing the duration of the flow and the quantity of fluid used.

### Object of the Invention

It is therefore the object of this invention to provide an efficient method and device for the cleaning of pipetting needles.

### Summary of the Invention

The present invention provides a cleaning device for the cleaning of a pipetting tip, comprising a horizontally extending upper part and a vertically from the lower end of the upper part extending shaft, wherein both parts comprise a vertically extending central receiving hole for receiving the pipetting tip, and wherein the upper part comprises at least one oscillating nozzle which is arranged perpendicular to the central receiving hole and which is connected by a channel to a first connector to a cleaning fluid supply.

Another aspect of the present invention relates to a device where the lower end of the shaft comprises a second connector for connecting the lower end of the central receiving hole to a drain.

In another embodiment of the device, the upper part comprises on its upper surface a collection vessel for fluids.

It may further be envisaged that the collection vessel is formed by an upwardly from the upper part's upper surface extending collar surrounding the upper end of the central receiving hole.

In another embodiment of the device, the upper part comprises on its upper surface a blind hole which is connected by a drain channel to the central receiving hole.

It may also be intended that the blind hole is arranged inside the collection vessel.

Another aspect of the invention relates to a device where the at least one oscillating nozzle is also connected to a supply for compressed air.

Another embodiment of the device may comprise at least two opposite to another arranged oscillating nozzles.

It is further intended that the channel for connecting the at least one oscillating nozzle to a cleaning fluid supply may surround the central receiving channel.

The device according to the present disclosure may further comprise holes in the upper part for fixing the device.

Another object of the present disclosure relates to a method for cleaning of a pipette tip, comprising the following steps
- providing a cleaning fluid to the oscillating nozzle;
- moving the pipette tip into a central receiving hole of a cleaning device comprising a horizontally extending upper part and a vertically from the lower end of the upper part extending shaft, wherein both parts comprise a vertically extending central receiving hole for receiving the pipetting tip, and wherein the upper part comprises at least one oscillating nozzle which is arranged perpendicular to the central receiving hole and which is connected by a channel to a first connector to a cleaning fluid supply;
- Applying an oscillating flow of cleaning fluid from the oscillating nozzle to the pipette tip while moving it along a z-axis into the central receiving hole;
- Removing the pipette tip from the central receiving hole.

The method may further comprise the step encompassing an oscillating flow of cleaning fluid from the oscillating nozzle is also applied to the pipette tip during its removal from the central receiving hole.

Another aspect of the method according to the instant disclosure relates to a step comprising the oscillating nozzle applying compressed air to the pipette tip during its removal from the central receiving hole.

The method may also encompass the use of a single oscillating nozzle for applying cleaning fluid and compressed air to the pipette tip.

The method of the present invention may comprise the use of a blind hole in the upper surface of the upper part for cleaning the inner part of the pipette tip.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a perspective view onto a cleaning device according to the present invention.
FIG. 2 shows a sectional view through upper part and shaft of a cleaning device according to the invention.
FIG. 3 shows a sectional view through upper part and shaft of the cleaning device with a pipette needle that is introduced into the central receiving shaft.
FIG. 4 shows a partial sectional view in two perpendicular planes of the upper part of an embodiment of the cleaning device.

### Detailed Description of the Invention and the Figures

The technical problem is solved by the independent claims. The dependent claims cover further specific embodiments of the invention.

The terms pipetting tip and pipetting needle are used synonymously. The term fluid comprises liquids and gasses which may comprise solids.

The present invention is based on the use of a specific nozzle for introducing the cleaning fluid into the cleaning device for improving the rinsing effect while using less cleaning fluid. A new feature is the use of a so-called oscillating nozzle within the pipette tip cleaning device. Oscillating nozzles generate an oscillating fluid flow without the use of moving parts. Due to the produced oscillating or pulsating fluid jet stream, a higher impulse can be applied to the surface of the tip which is to be cleaned without cleaning a smaller area. The hammer impact pressure increases because of the temporal sequence of the oscillating fluid jet stream, which results in a cleaning performance that is up to seven times higher. The higher cleaning performance allows to reduce the duration of the actual cleaning and the required amount of cleaning fluid.

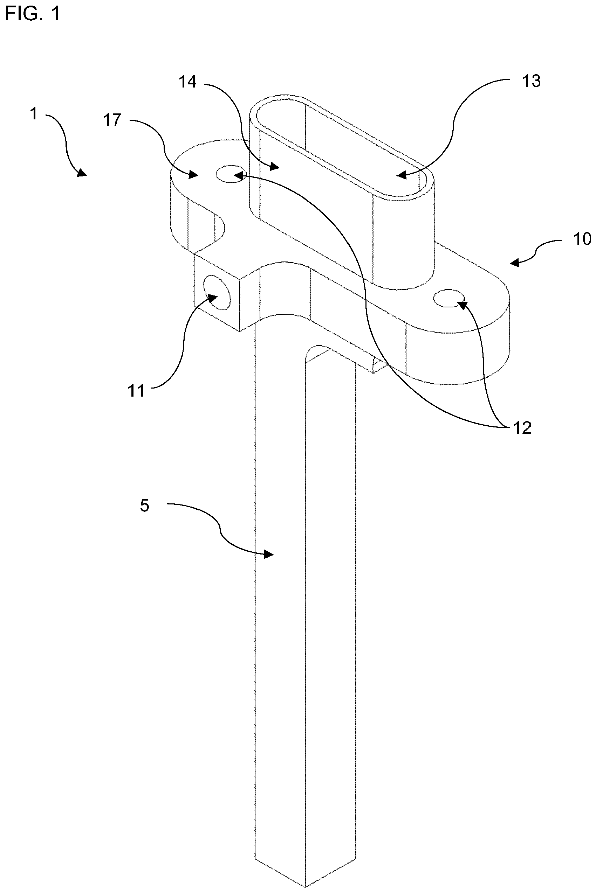

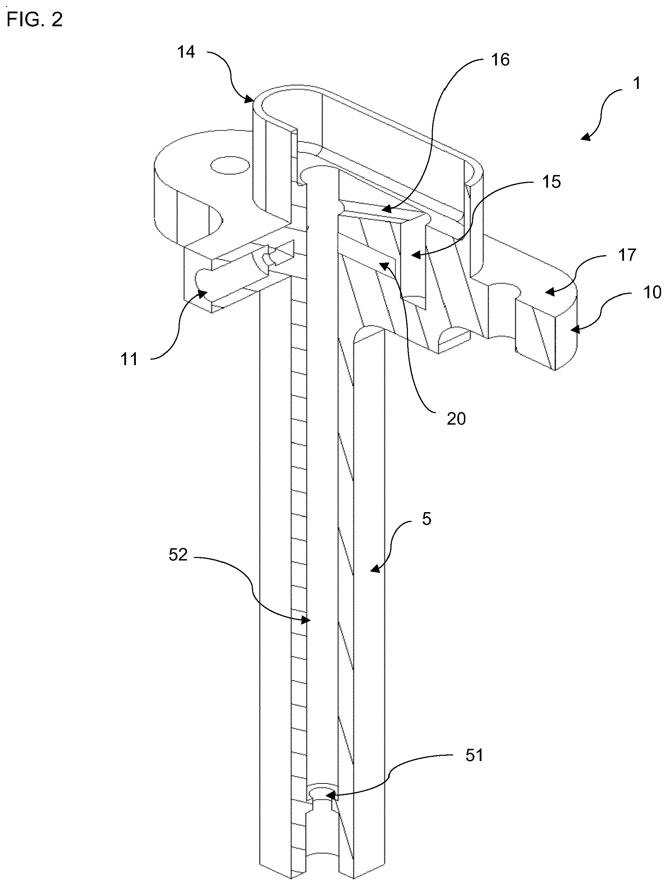

FIG. 1 shows a perspective view onto a cleaning device according to the present invention. The cleaning device 1 comprises an upper part 10 which extends horizontally and a downwards vertically extending shaft 5. The upper part 10 comprises a first connector 11 to a cleaning pump and two holes 12 for fixing of the cleaning device 1 to another device or an assembly group (both not shown). The lower end of shaft 5 comprises a second connector 51 (not shown, see FIG. 2) to a drain or a suction pump (both not shown). The upper part 10 further comprises on its upper surface 17 a collection vessel 13 for fluids which is formed by an upwardly extending collar 14. The first connector 11 and the second connector 51 to a drain may both comprise a thread for fixing a tube from a pump or to a drain or pump.

FIG. 2 shows a sectional view through upper part 10 and shaft 5 of a cleaning device 1. Shaft 5 and upper part 10 of cleaning device 1 comprise a central vertically extending receiving hole 52 over its entire vertical length for receiving a pipetting tip (not shown). Upper part 10 comprises a blind hole 15 for active internal rinsing of a pipette tip as well as for serving for taking up a passive overflow within collar 14. The fluid from the active internal flushing drains into the central receiving hole 52 via drain channel 16 of the upper part 10. Optionally, a bore for receiving fluid waste to be discharged can also be introduced (not shown).

An important part of the cleaning device 1 is at least one oscillating nozzle 20 which is arranged perpendicular to the central receiving hole 52 in the upper part 10. It is positioned at a height which ensures that the pipetting needle can be cleaned over a pre-defined and intended length on its outer surface. The pre-defined length corresponds to the immersion depth of the needle in the reagent or the patient sample, including a safety allowance. The pipetting needle is moved into the central receiving hole 52 along a z-axis and simultaneously the rinsing pump flows cleaning fluid into the oscillating nozzle 20. This already cleans the outer surface of the needle while further entering the central receiving hole 52. Depending on the parameters set for the cleaning process, the oscillating nozzle 20 can also rinse the pipetting needle during its removal from the central receiving hole 52.

Depending on the amount of fluid running down the needle, a droplet break-off can be achieved for reducing the remaining volume of cleaning fluid on the needle to a minimum. Alternatively, the oscillation nozzle can also be used for drying the pipetting needle. In this case, an additional oscillating nozzle can be supplied with compressed air to wipe off remaining liquid via a fan-shaped flow when the pipetting needle is removed from the central receiving hole 52. Alternatively, the oscillating nozzle which has already been used for providing the cleaning fluid can be supplied with compressed air via a switching valve. Using one oscillating nozzle 20 for both tasks would allow for a more compact design of the upper part 10.

The cleaning of pipetting needles with fluids is always related to a basic risk of contamination of the upper surface 17 of the cleaning device 1 with cleaning fluid coming from the pipetting needle. There are several options to avoid contamination. Collar 14 allows fluid to overflow from the active rinsing process into the central receiving hole 52, but also serves as a splash guard to prevent contamination of the surrounding upper surface 17 of the upper part 10. Alternatively, splash protection is provided via an additional hole that is slightly larger than the pipetting needle. The oscillating nozzle is located below the hole, so that the pipetting needle can dip through the hole for cleaning, but no liquid can reach the deck through the hole.

Contamination can also be prevented through the placement and orientation of the oscillating nozzle. The at least one oscillation nozzle may be arranged with a downwards directed angle for preventing the spilling of fluids. Another alternative is to mount the at least one oscillating nozzle 20 at a sufficient distance from the upper opening of the central receiving hole 52 so that the fluid remains inside the central receiving hole 52. A combination of the different alternatives is also conceivable.

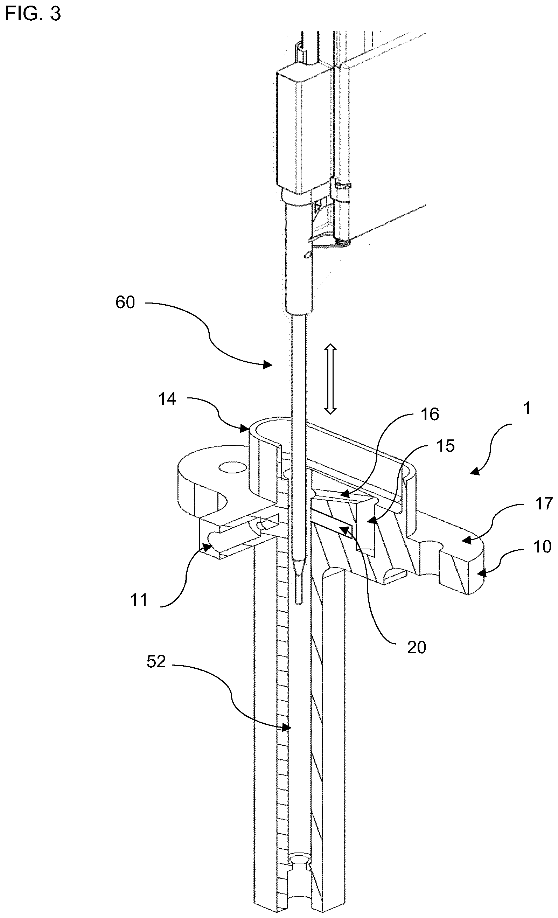

FIG. 3 shows the sectional view of FIG. 2 with a pipette needle that is introduced into the central receiving hole 52.

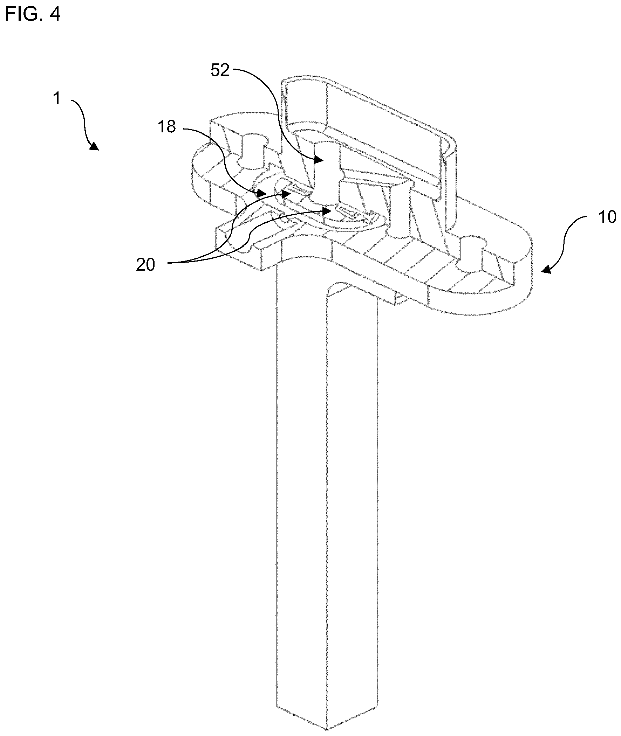

FIG. 4 shows a partial sectional view in two perpendicular planes of the upper part 10 of an embodiment of the cleaning device 1. The embodiment comprises two opposite arranged oscillating nozzles 20 are arranged perpendicular to the central receiving hole 52. It is obvious for a skilled person that more than two oscillation nozzles may be used. A channel 18 surrounds the central receiving hole 52 and serves thus for providing cleaning fluid to both oscillating nozzles 20.

It is an advantage that in contrast to a stationary jet, the oscillation of the fluid jet increases the cleaning effect. Possible impurities experience several pulses per second depending on the frequency of the oscillation. However, this process requires in no way a larger quantity of cleaning medium. The related higher efficiency compared to a conventional nozzle thus results in several advantages:
- The reduction of the amount of cleaning medium by increasing the washing efficiency with a comparable or even better cleaning result. This reduces the total throughput and thus increases the walk-away time of the system.
- The reduction of the cleaning time by increasing the washing efficiency with a comparable or even better cleaning result. This also reduces the dwell time of the pipettor in the cleaning device.
- The combination of reduced cleaning time and reduced material usage due to the high efficiency of the cleaning nozzle so that both cleaning-relevant factors (material usage, time) can also be reduced. This increases the system cycle and at the same time reduces the additional costs for consumables (cleaning fluid).

An alternative approach to the described embodiments for reducing or eliminating the dwell time in the cleaning device relates to a cleaning device which is directly attached to the pipettor or part of the pipettor. Such a device can then be realized as a ring-shaped element, for example. This is arranged around the pipetting needle and moved along the Z-axis of the pipetting needle, coaxially to the pipetting needle axis, by means of its own drive. With such a design, it would be possible to clean the pipetting needle during the movement of the X- and Y-axis. The needle could be comprehensively cleaned via a ring nozzle using the cleaning ring's own drive. An integrated suction member can be used for aspirating the cleaning liquid directly under the ring nozzle.

However, a cleaning device that moves along the pipetting needle has two major disadvantages: Another liquid line must travel/move along the pipetting axes which is related to the potential risk of leakage and contamination of the deck. In addition, another drive is needed on the pipettor. This additionally increases the weight of the system and thus has a negative influence on the acceleration and deceleration ramps of the pipettor. To avoid such disadvantages, it would also be possible to design a stationary cleaning device that functions like a washing line. This would allow the pipettor to pass through the cleaning device between two positions during the process. In the process, the composite could first be rinsed, and if necessary, removed and dried. All steps could be carried out while the pipettor is moving. Under certain circumstances, however, the feed speed would have to be reduced in order to achieve a sufficient cleaning result.

The foregoing description of the preferred embodiment of the invention has been presented for purposes of illustration and description. It is not intended to be exhaustive or to limit the invention to the precise form disclosed, and modifications and variations are possible considering the above teachings or may be acquired from practice of the invention. The embodiment was chosen and described to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: cleaning device
- 5: shaft
- 10: upper part
- 11: first connector
- 12: hole for fixing
- 13: collection vessel
- 14: collar
- 15: blind hole
- 16: drain channel
- 17: upper surface
- 18: channel
- 20: oscillating nozzle
- 51: second connector
- 52: central receiving hole
- 60: pipetting needle

## Claims

1. A cleaning device for the cleaning of a pipetting tip, comprising a horizontally extending upper part and a vertically from the lower end of the upper part extending shaft, wherein both parts comprise a vertically extending central receiving hole for receiving the pipetting tip, and wherein the upper part comprises at least one oscillating nozzle which is arranged perpendicular to the central receiving hole and which is connected by a channel to a first connector to a cleaning fluid supply.

2. The device of claim 1, wherein the lower end of the shaft comprises a second connector for connecting the lower end of the central receiving hole to a drain.

3. The device of claim 1 or 2, wherein the upper part comprises on its upper surface a collection vessel for fluids.

4. The device of claim 3, wherein the collection vessel is formed by an upwardly from the upper part's upper surface extending collar surrounding the upper end of the central receiving hole.

5. The device of any one of claims 1 to 4, wherein the upper part comprises on its upper surface a blind hole which is connected by a drain channel to the central receiving hole.

6. The device of claim 5, wherein the blind hole is arranged inside the collection vessel.

7. The device of any one of claims 1 to 6, wherein the at least one oscillating nozzle is also connected to a supply for compressed air.

8. The device of any of claims 1 to 7, comprising at least two opposite to another arranged oscillating nozzles.

9. The device of any one of claims 1 to 8, wherein the channel for connecting the at least one oscillating nozzle to a cleaning fluid supply surrounds the central receiving channel.

10. The device of any one of claims 1 to 9, comprising holes in the upper part for fixing the device.

11. A method for cleaning of a pipette tip, comprising the following steps
- providing a cleaning fluid to the oscillating nozzle;
- moving the pipette tip into a central receiving hole of a cleaning device comprising a horizontally extending upper part and a vertically from the lower end of the upper part extending shaft, wherein both parts comprise a vertically extending central receiving hole for receiving the pipetting tip, and wherein the upper part comprises at least one oscillating nozzle which is arranged perpendicular to the central receiving hole and which is connected by a channel to a first connector to a cleaning fluid supply;
- Applying an oscillating flow of cleaning fluid from the oscillating nozzle to the pipette tip while moving it along a z-axis into the central receiving hole;
- Removing the pipette tip from the central receiving hole.

12. The method of claim 11, wherein an oscillating flow of cleaning fluid from the oscillating nozzle is also applied to the pipette tip during its removal from the central receiving hole.

13. The method of claim 11, wherein the oscillating nozzle applies compressed air to the pipette tip during its removal from the central receiving hole.

14. The method of claim 13, wherein a single oscillating nozzle is used for applying cleaning fluid and compressed air to the pipette tip.

15. The method of any one of claims 11 to 14, wherein a blind hole in the upper surface of the upper part is used for cleaning the inner part of the pipette tip.
